# NEW EUROPEAN PATENT SPECIFICATION

(11) **EP 0 455 370 B2**
(45) Date of publication and mention of the opposition decision: **09.08.2000**
(45) Mention of the grant of the patent: 12.03.1997
(21) Application number: 91303346.0
(22) Date of filing: 16.04.1991
(51) Int. Cl.: C08J 3/22, C08L 67/00, C09D 17/00

(54) **The incorporation of additives into polyesters**
Beimengen von Zusätzen in Polyestern
Incorporation d'additifs dans des polyesters

(30) Priority: 19.04.1990 GB 9008847
(43) Date of publication of application: 06.11.1991
(73) Proprietor: METACOL LIMITED, Hull, N. Humberside HU2 0JZ (GB)
(72) Inventor: Tanton, Richard, Kirk Ella, Hull HU10 7PP (GB)
(74) Representative: W.P. Thompson & Co.

(56) References cited:
- EP-A- 0 242 754
- EP-A- 0 310 181
- DE-A- 2 064 095
- US-A- 4 443 573
- DATABASE WPIL, accession no. 86-111143, Derwent Publications Ltd, London, GB; & NL-A-84 02 535 (HOECHST HOLLAND N.V.)
- Römpp, Chemie Lexikon, 1962, S. 3788 f. (Rapsöl)

## Description

The present invention relates to the incorporation of additives into polyesters, and more particularly, though not exclusively, to the incorporation of colourants into esters of aromatic di-acids, such as, for example polyethyleneterephthalate (PET), polybutyleneterephthalate (PBT) and terephthalateglycol (PETG), which results where cyclohexanedimethanol is used to reduce the reaction times in esterification of ethyleneglycol and terephthalic acid.

More particularly still, the invention is concerned with providing liquid colourants for colouring polyesters which are used in the packaging of food and drink.

One aspect of the invention provides a liquid colourant for colouring polyesters in the following manufacturing processes, namely the production of coloured polyester sheets or film by extrusion, the production of polyester mouldings by injection moulding and the production of coloured polyester bottles by extrusion blow moulding and injection blow moulding.

It is known to incorporate additives into polymers. Depending on the polymer, additives can be incorporated using a variety of techniques.

Colourants, for example, may be compounded with the natural polymer at the required use level and moulded as such.

However, the compounded route is expensive and only feasible for large tonnages. It also suffers the disadvantage that long lead times are required and large volumes of stock are needed for each colour; this means space is tied up and working capital is absorbed.

It is more usual to produce "master batches" by compounding the colourant with the polymer. This involves mixing dry pigment or dye into the polymer at a higher than normal percentage and extruding. The resultant master batch of concentrate is granulated and sold to moulders. These master batches are then blended with the natural polymer at the machine to give coloured mouldings. The disadvantage with such methods is that uneven dispersion of the dye within the master batch often results in poor dispersion of the dye in the melt compounding process.

Alternatively, the additive may be introduced into the polymer in liquid form by dispersing the additive in an appropriate carrier. Using liquid carriers is particularly favoured when the additive is a colourant, since liquid colourants have the following advantages over the use of dry pigments and concentrates, namely:
(a) Liquid colourants can be dosed into a moulding machine just below the hopper whereas with dry pigments and concentrates an in-hopper mixer is normally required. With liquid colourants a thorough mixing of the liquid colourant with the natural polymer can be effected by the plasticising screw.
(b) The dosage of liquid colourants can be very accurately controlled using self sensing peristaltic pumps. These adjust themselves to give the correct injection of liquid at each cycle.
(c) Liquid colourant dose rates vary from 0.1% to 2% which are small compared to solid systems. It is therefore much cheaper to colour by the liquid route, and
(d) With a liquid system the colour change can be effected by removing a tube of one colour from the throat area of the equipment and substituting it with one of the next colour; no cleaning is required. On the other hand, with solid systems colour change is a very time consuming process since the coloured material must be completely removed from the large heated hopper assembly needed to deliver the polymer in a completely dry condition.

Whilst liquid systems have been developed for use with the polyolefins such as polypropylene, polystyrene and polyethylene, these liquid colourants comprise a variety of plasticisers, surfactants and suspending agents which have proved to be unsuitable with, polyesters such as for example, PET,PETG and PBT.

The production of liquid colourants for use with those polyesters used in the food industry, for example PET, PETG and PBT has not hitherto been possible due to the critical requirements of these polymers and food contact regulation requirements. In particular, the viscosity and clarity of these polymers is significantly affected by the introduction of foreign additives. Furthermore, water must be excluded as it breaks the ester bonds of the polymer at standard moulding conditions. It is therefore vital that any additives or carrier added to the polymers do not noticeably affect the physical properties.

The liquid colourants used with more tolerant polymers, such as, for example polyethylene and polystyrene proved incompatible with, polyesters for example, PET, PETG and PBT. Their use resulted in cloudy mouldings. This was probably due to significant quantities of water being present. (An aqueous content of greater than 5 parts per million was found to result in de-esterification of the polyester with a resultant loss of physical strength and clarity). Furthermore, if the polyester, such as, for example, PET, PETG and PBT was coated with a polyvinylidenedichloride (PVdC) layer to reduce oxygen permeability, essential for storing beer and cider, the liquid systems would migrate under pressure through the PET, PETG or PBT causing bubbles to appear under the PVdC coating.

U.S. 4 443 573 discloses dispersions and a process for their incorporation into fibre forming polymers. The dispersions comprise a polymer additive and a carrier of pentaerythritol or dipentaerythritol and a fatty acid of C₅ through C₂₆. In particular the invention is concerned with adding titanium dioxide to polyamides and polyesters to decrease the lustre of the resulting spun fibre. The examples refer to the use of esters of C₅-C₁₀ fatty acids and all incorporate wetting agents.

JP 62-167349 discloses using a vegetable oil and/or an expoxidised vegetable oil as a dispersion medium for a colourant for polyester.

It is an object of the present invention to provide a means of introducing additives, and in particular colourants, via a liquid route into polyesters such as for example those derived from ethylene glycols and terephthalic acids, more

According to one aspect of the present invention there is provided a liquid additive-containing composition comprising from 2-90% of an additive to be incorporated into a polyester, said additive being dissolved or dispersed in a liquid carrier comprising an ester, of a substantially unsaturated C₁₄-C₂₂ fatty acid and alcohol, which is liquid at room temperature but excluding vegetable oils in a raw state, in a heat treated state or in a blown state and epoxidised forms thereof.

Preferably the C₁₄-C₂₂ fatty acids are substantially unbranched hydrocarbons. The alkyl chain may contain one or more double bonds. Where there are several double bonds present these will be separated by at least one methylene group

The fatty acid is preferably a liquid-at room temperature and will therefore include the unsaturated fatty acids derived from myristate, palmitate, stearate, arachidate and behenate. Examples of those derivatives with one double bond include palmitoleate and oleate, those with two double bonds include linoleate, those with three double bonds include linolenate and those with include arachidonate. Only those which give rise to a liquid ester on reaction with an alcohol will however be suitable.

Generally speaking, as the chain length of the fatty acid decreases and the number of double bonds increases, the fluidity of the fatty acid will increase, and the fatty acids will become more suitable.

Short chain fatty acids are likely to be too volatile and long chain fatty acids will be solid depending of course on the degree of saturation, since the more saturated the fatty acid, the more likely it is to be solid.

Thus the preferred, fatty acids from which the ester of the invention may be derived, will be the C₁₆ to C₂₀ fatty acids and more preferably still oleic acid.

Fatty acids are often obtained commercially as products from natural sources and may therefor contain a number of impurities. For example oleic acid, may be a mixture of 67% C₁₈₋₁ oleic acid with C₁₈₋₂ linoleate, C₁₈₋₀ stearate and C₁₆, C₁₄ and C₂₀ homologues of these. Thus the fatty acid of choice is in practice likely to be a substantially unsaturated fatty acid of a given type but containing other derivatives.

The esters of fatty acids in the C₁₄-C₂₂ range are particularly desirable since they also act as wetting agents, thereby aiding dispersion. As a result colourants and other additives can be introduced in far greater amounts than is possible with esters of fatty acids in the C₅-C₁₀ range. This is particularly desirable where opaque colouration is required.

Comparative tests on C₅-C₁₀ esters of pentaerythritol and a C₁₈₋₁ ester indicated a 33% increase in the loading of TiO₂ could be achieved with the C₁₈₋₁ ester.

Furthermore flocculation of the additive was exhibited when the C₅-C₁₀ esters were mixed with a polymer melt. As well as giving rise to an unacceptable appearance, this effect indicates incompatibility and therefore unsuitability where the products are to be associated with food products.

Similarly the higher chained fatty acids such as C₂₈ are solid at room temperature and are therefore unsuitable.

The preferred alcohols from which the ester of the invention are derived are polyols, preferably a polyhydroxyalkyl which may be straight and/or branched and which will have a number of hydroxy groups available for ester formation with the fatty acids.

Preferably the alcohol will have at least 3 hydroxy groups such as, for example, trihydric alcohols such as glycerol C₃H₅(OH)₃. More preferably however, the alcohol will have at least 4 hydroxy groups and will include compounds such as, for example, pentaerythritol and tetraethylolmethane.

The ester resulting from reacting the aforementioned acids and alcohols will then be used to introduce additive, preferably colourants into polyesters of the type described.

However additives other than colourants may be mixed with the carrier, and these may include plasticisers, preferably an adipic acid or a phthalic acid ester of a C₆-C₁₂ alcohol, for example di 2-ethylhexyl ester, most preferably di 2-ethylhexyl adipate DEHA or diisodecyl adipate DIDA. These ester plasticisers enable the highest possible load of colourant to be obtained.

Preferably the fatty acid is a monounsaturated fatty acid such as oleic acid and the alcohol is pentaerythritol; the resulting ester is more preferably the mono, di or tri oleate, more preferably still the dioleate.

In one embodiment the additive is a colourant, and since these are the additives most commonly introduced into polyesters, for example those formed from reacting ethyleneglycol and terephthalic acid, most commonly PET or PETG, the invention will be described with reference to the introduction of colourants into these polymers although it will be understood by one skilled in the art that it is not restricted to the introduction of colourants into these specific polymers.

One advantage of the invention is that the carrier acts as a wetting agent. It can therefore carry more.

According to another aspect of the invention there is provided a liquid additive-containing composition comprising from 2-90% of an additive to be incorporated into a polyester, said additive being dissolved or dispersed in a liquid carrier consisting essentially an ester of a substantially unsaturated C₁₄-C₂₂ fatty acid and alcohol, which is liquid at room temperature but excluding vegetable oils in a raw state, in a heat treated state or in a blown state and epoxidised forms thereof.

The carrier pentaerythritol oleate is particularly suitable for use in the food industry, since it is not toxic and has been found not to migrate above detectable limits making it particularly suitable for introducing colourants into polyesters which are used in the manufacture of food packaging.

A further aspect of the invention provides a method of producing coloured polyester bottles by the addition of a colourant into a process, characterised in that said colourant is added as a liquid comprising the colourant and pentaerythritol oleate.

A further aspect of the invention provides a method of producing coloured polyester sheet or film by the addition of a colourant in a process, characterised in that said colourant is added as a liquid comprising the colourant and pentaerythritol oleate.

A further aspect of the invention provides a method of producing coloured polyester mouldings by the addition of a colourant in a process, characterised in that said colourant is added as a liquid comprising the colourant and pentaerythritol oleate.

In one embodiment pentaerithritol oleate, in the form pentaerythritol di-oleate (although any of the oleate forms or combinations thereof may be used) is present in amounts from 10% to 98% by weight of the total weight of composition.

The liquid colourants will contain a minimal water content, preferably less than 5 parts per million, and will have low volatility at the temperature of use (260°C - 320°C).

Since in one embodiment the compositions are to be used to colour plastics used in bottle making and the bottles are likely to contain beverages and cosmetics, it is essential that the colourant and carrier are of very low toxicity and are used in amounts which in the final product do not migrate above prescribed limits.

The composition may contain other additives including emulsifiers and surface active agents, such as, e.g. polyoxyethylene derivatives of fatty acid partial esters of sorbitol anhydride, for example Tween 80, wetting agents, and ester plasticisers, for example di 2-ethylhexyl adipate (DEHA), di-isodecyl adipate (DIDA) di(iso)octyl phthalate (D(I)OP) and di (2-ethylhexyl) phthalate (DEHP).

Preferably the additives are used in the following ranges:

| | |
|---|---|
| Pentaerythritol oleate (carrier) | 10 - 98% by weight |
| Colourant (additive) | 2 - 90% |
| Ester plasticiser | 0 - 10% |
| Wetting agent | 0 - 1% |
| Desiccant | 0 - 1% |
| Emulsifier/surface active agent | 0 - 10% |
| Rheological control agent | 0 - 2% |

According to a further aspect of the present invention there is provided a method of introducing an additive into a polyester, characterised in that the method comprises dissolving or dispersing the additive into an ester of a substantially unsaturated C₁₄-C₂₂ fatty acid and alcohol, which is liquid at room temperature and introducing the resulting liquid into the polyester but excluding vegetable oils in a raw state, in a heat treated state or in a blown state and epoxidised forms thereof.

In one embodiment the additive, a colouring agent, is dispersed in pentaerythritol oleate and the resulting dispersion is used to colour PET, PBT or PETG.

In one embodiment a plasticiser is added. This has the advantage that loading of the colourant can be further increased. This is particularly desirable where opaque colours are required. The plasticiser acts to reduce the viscosity, thereby increasing the load.

In another embodiment, a thickener is added. This has the advantage of decreasing the load of the colourant and is particularly desirable where tints are required.

The invention will be further described by way of example only with reference to the following example compositions. These were all prepared by high speed stirring using a Cowles-type blade. Pigment dispersions as distinct from dyes were subsequently milled to ensure full wetting and deagglomeration.

### EXAMPLE 1

In order to colour a PET bottle green, a liquid colourant, which could be added to PET was prepared. The liquid colourant comprised the following composition:

### TRANSPARENT GREEN

| | |
|---|---|
| P.E.Dioleate | 55.00 % |
| Solv. Green 28 (Solvaperm Green G Hoechst) | 45.00 % |

The composition was added to PET in sufficient quantity to produce the desired colour.

For other colours, compositions comprising components in the following proportions may be used:

### EXAMPLE 2

### TRANSPARENT BLUE

| | |
|---|---|
| P.E.Dioleate | 50.00 % |
| Solv. Blue 35 (Waxoline Blue RPFW, ICI) | 50.00 % |

### EXAMPLE 3

### TRANSPARENT VIOLET

| | |
|---|---|
| P.E.Dioleate | 47.00 % |
| Solv. Vl. 17 (Waxoline Violet AFW, ICI) | 53.00 % |

### EXAMPLE 4

### BROWN

| | |
|---|---|
| P.E.Dioleate | 33.00 % |
| Red Iron Oxide (Bayferrox 120NM Bayer) | 67.00 % |

### EXAMPLE 5

### WHITE

| | |
|---|---|
| P.E.Dioleate | 40.00 % |
| TiO₂ (Plastics Grade) | 60.00 % |

The compositions can be made very pale by using very little colourant compared to carrier, although it will probably be necessary to add a thickener. Thus, for example, when making a pale blue sample match a composition of the type given in Example 6 may be prepared.

### EXAMPLE 6

| | |
|---|---|
| P.E. Dioleate | 92.12% |
| hydrogenated castor oil | 1.88% |
| Solvent Violet 17 base | 3 % |
| Solvent Blue 35 base | 3 % |

It will be noted that the preferred thickener is hydrogenated castor oil, although other thickeners could be used.

Other additives, for example, may include: general purpose emulsifiers and surface active agents, e.g. polyoxyethylene derivatives of fatty acid partial esters of sorbitol anhydride such as Tween 80; plasticisers such as DEHA, DOP, DIOP and DIDA; wetting agents, and desiccants.

Thus for example a straight white PET colouring composition may comprise the components given in Example 7 or 8 which have higher pigment loadings than Example 5.

### EXAMPLE 7

### STRAIGHT WHITE

| | |
|---|---|
| P.E. Dioleate | 19.8 % |
| TiO₂ (Plastics Grade) | 67.0 % |
| DEHA. | 13.2 % |

### EXAMPLE 8

### STRAIGHT WHITE

| | |
|---|---|
| P.E. Dioleate | 10.00% |
| Tween 80 (ICI) | 6.00% |
| DEHA. | 8.85% |
| TiO₂ (Plastics Grade) | 74.44% |
| Wetting Agent | 0.5% |
| Desiccant | 0.56% |

## Claims

1. A liquid additive-containing composition comprising from 2-90% of an additive to be incorporated into a polyester, said additive being dissolved or dispersed in a liquid carrier; comprising an ester, of a substantially unsaturated C₁₄-C₂₂ fatty acid and alcohol, which is liquid at room temperature but excluding vegetable oils in a raw state, in a heat treated state or in a blown state and epoxidised forms thereof.

2. A composition as claimed in claim 1, in which the fatty acid is at least a monounsaturated unbranched hydrocarbon.

3. A composition as claimed in claim 1 or 2, in which the fatty acid is oleate.

4. A composition as claimed in any of the preceding claims, in which the alcohol is a polyol having at least 3 hydroxyl groups.

5. A composition as claimed in any of the preceding claims, in which the alcohol is pentaerythritol.

6. A composition as claimed in any of the preceding claims, in which the ester is pentaerythritol oleate.

7. A composition as claimed in claim 6, in which the pentaerythritol oleate is pentaerythritol dioleate.

8. A composition as claimed in any of the preceding claims, wherein the additive is a colourant.

9. A composition as claimed in any of the preceding claims, which further comprises a plasticiser.

10. A composition as claimed in claim 9, in which the plasticiser is adipic acid or a phthalic acid ester of a C₆-C₁₂ alcohol.

11. A composition as claimed in claim 9 or 10, in which the plasticiser is DEHA or DIDA.

12. A composition as claimed in any of the preceding claims, which further comprises a thickener.

13. A composition as claimed in claim 12, in which the thickener is hydrogenerated castor oil.

14. A liquid additive-containing composition comprising from 2-90% of an additive to be incorporated into a polyester, said additive being dissolved or dispersed in a liquid carrier consisting essentially an ester of a substantially unsaturated C₁₄-C₂₂ fatty acid and alcohol, which is liquid at room temperature but excluding vegetable oils in a raw state, in a heat treated state or in a blown state and epoxidised forms thereof.

15. A method of introducing an additive into a polyester, characterised in that the method comprises dissolving or dispersing the additive into an ester of a substantially unsaturated C₁₄-C₂₂ fatty acid and alcohol, which is liquid at room temperature and introducing the resulting liquid into the polyester but excluding vegetable oils in a raw state, in a heat treated state or in a blown state and epoxidised forms thereof.

16. A method of producing coloured polyester bottles by the addition of a colourant into a process, characterised in that said colourant is added as a liquid composition as claimed in claim 8.

17. A method of producing coloured polyester sheet or film by the addition of a colourant in a process, characterised in that said colourant is added as a liquid composition as claimed in claim 8.

18. A method of producing coloured polyester mouldings by the addition of a colourant into a process, characterised in that said colourant is added as a liquid composition as claimed in claim 8.

## Patentansprüche

1. Flüssige Additiv enthaltende Zusammensetzung, die von 2-90% eines Additivs umfasst, das in einen Polyester inkorporiert werden soll, wobei genanntes Additiv in einem flüssigen Träger aufgelöst oder dispergiert wird, der einen Ester von einer im wesentlichen ungesättigten C₁₄-C₂₂-Fettsäure und Alkohol umfasst, welcher bei Raumtemperatur flüssig ist, aber Pflanzenöle im Rohzustand, im wärmebehandelten Zustand oder im geblasenen Zustand und epoxidierte Formen davon ausschließt.

2. Zusammensetzung nach Anspruch 1, worin die Fettsäure mindestens ein einfach ungesättigter, unverzweigter Kohlenwasserstoff ist.

3. Zusammensetzung nach Anspruch 1 oder 2, worin die Fettsäure Oleat ist.

4. Zusammensetzung nach einem der vorangehenden Ansprüche, worin der Alkohol ein Polyol mit mindestens 3 Hydroxylgruppen ist.

5. Zusammensetzung nach einem der vorangehenden Ansprüche, worin der Alkohol Pentaerythritol ist.

6. Zusammensetzung nach einem der vorangehenden Ansprüche, worin der Ester Pentaerythritololeat ist.

7. Zusammensetzung nach Anspruch 6, worin das Pentaerythritololeat Pentaerythritoldioleat ist.

8. Zusammensetzung nach einem der vorangehenden Ansprüche, worin das Additiv ein Farbstoff ist.

9. Zusammensetzung nach einem der vorangehenden Ansprüche, die darüber hinaus einen Weichmacher umfasst.

10. Zusammensetzung nach Anspruch 9, worin der Weichmacher Adipinsäure oder ein Phthalsäureester von einem C₆-C₁₂-Alkohol ist.

11. Zusammensetzung nach Anspruch 9 oder 10, worin der Weichmacher DEHA (Di-2-ethylhexyladipat) oder DIDA (Di-isodecyladipat) ist.

12. Zusammensetzung nach einem der vorangehenden Ansprüche, die darüber hinaus ein Verdickungsmittel umfasst.

13. Zusammensetzung nach Anspruch 12, worin das Verdickungsmittel gehärtetes Kastoröl ist.

14. Flüssige Additiv enthaltende Zusammensetzung, die von 2-90% eines Additivs umfasst, das in einen Polyester inkorporiert werden soll, wobei genanntes Additiv in einem flüssigen Träger aufgelöst oder dispergiert wird, der im wesentlichen aus einem Ester einer im wesentlichen ungesättigten C₁₄-C₂₂-Fettsäure und Alkohol besteht, der bei Raumtemperatur flüssig ist, aber Pflanzenöle im Rohzustand, im wärmebehandelten Zustand oder im geblasenen Zustand und epoxidierte Formen davon ausschließt.

15. Verfahren zum Einführen eines Additivs in einen Polyester, dadurch gekennzeichnet, dass das Verfahren das Auflösen oder Dispergieren des Additivs in einem Ester einer im wesentlichen ungesättigten C₁₄-C₂₂-Fettsäure und Alkohol umfasst, welcher bei Raumtemperatur flüssig ist und Einführen der sich ergebenden Flüssigkeit in den Polyester, aber Pflanzenöle im Rohzustand, im wärmebehandelten Zustand oder im geblasenen Zustand und epoxidierte Formen davon ausschließt.

16. Verfahren zum Herstellen farbiger Polyesterflaschen durch das Zufügen eines Farbstoffes in einen Prozess, dadurch gekennzeichnet, dass genannter Farbstoff als eine flüssige Zusammensetzung nach Anspruch 8 zugesetzt wird.

17. Verfahren zum Herstellen farbiger Polyesterfolie oder von farbigem Polyesterfilm durch das Zufügen eines Farbstoffes in einen Prozess, dadurch gekennzeichnet, dass genannter Farbstoff als eine flüssige zusammensetzung nach Anspruch 8 zugesetzt wird.

18. Verfahren zum Herstellen farbiger Polyesterformteile durch das Zufügen eines Farbstoffes in einen Prozess, dadurch gekennzeichnet, daß genannter Farbstoff als eine flüssige Zusammensetzung nach Anspruch 8 zugesetzt wird.

## Revendications

1. Une composition liquide contenant un additif comprenant d'entre 2 et 90% d'un additif à incorporer dans un polyester, ledit additif étant dissous ou dispersé dans un porteur liquide, comprenant un ester, d'un acide gras C₁₄-C₂₂ sensiblement insaturé et un alcool, qui est liquide à température ambiante, mais excluant des huiles végétales dans un état brut, dans un état traité thermiquement ou dans un état soufflé et des formes époxydées des mêmes.

2. Une composition telle que revendiquée dans la revendication 1, dans laquelle l'acide gras est au moins un hydrocarbure mono-insaturé non ramifié.

3. Une composition telle que revendiquée dans la revendication 1 ou 2, dans laquelle l'acide gras est de l'oléate.

4. Une composition telle que revendiquée dans l'une quelconque des revendications précédentes, dans laquelle l'alcool est un polyol ayant au moins 3 groupes hydroxyles.

5. Une composition telle que revendiquée dans l'une quelconque des revendications précédentes, dans laquelle l'alcool est du pentaérythritol.

6. Une composition telle que revendiquée dans l'une quelconque des revendications précédentes, dans laquelle l'ester est de l'oléate de pentaérythritol.

7. Une composition telle que revendiquée dans la revendication 6, dans laquelle l'oléate de pentaérythritol est du dioléate de pentaérythritol.

8. Une composition telle que revendiquée dans l'une quelconque des revendications précédentes, dans laquelle l'additif est un colorant.

9. Une composition telle que revendiquée dans l'une quelconque des revendications précédentes, qui comprend en outre un plastifiant.

10. Une composition telle que revendiquée dans la revendication 9, dans laquelle le plastifiant est de l'acide adipique ou un ester d'acide phtalique d'un alcool C₆-C₁₂.

11. Une composition telle que revendiquée dans la revendication 9 ou 10, dans laquelle le plastifiant est du DEHA (adipate de 2-éthylhexyle) ou du DIDA (adipate de diisodécyle).

12. Une composition telle que revendiquée dans l'une quelconque des revendications précédentes, qui comprend en outre un épaississant.

13. Une composition telle que revendiquée dans la revendication 12, dans laquelle l'épaississant est de l'huile de ricin hydrogénée.

14. Une composition liquide contenant un additif comprenant d'entre 2 et 90% d'un additif à incorporer dans un polyester, ledit additif étant dissous ou dispersé dans un porteur liquide, consistant sensiblement en un ester d'un acide gras C₁₄-C₂₂ sensiblement insaturé et un alcool, qui est liquide à température ambiante, mais excluant des huiles végétales dans un état brut, dans un état traité thermiquement ou dans un état soufflé et des formes époxydées des mêmes.

15. Une méthode pour introduire un additif dans un polyester, caractérisée en ce que la méthode comprend la dissolution ou la dispersion de l'additif dans un ester d'un acide gras C₁₄-C₂₂ sensiblement insaturé et un alcool, qui est liquide à température ambiante et l'introduction du liquide qui en résulte dans le polyester, mais excluant des huiles végétales dans un état brut, dans un état traité thermiquement ou dans un état soufflé et des formes époxydées des mêmes.

16. Une méthode pour produire des bouteilles en polyester coloré par l'addition d'un colorant dans un procédé, caractérisée en ce que ledit colorant est ajouté sous forme d'une composition liquide comme il est revendiqué dans la revendication 8.

17. Une méthode pour produire de la feuille ou de la pellicule de polyester coloré par l'addition d'un colorant dans un procédé, caractérisée en ce que ledit colorant est ajouté sous forme d'une composition liquide comme il est revendiqué dans la revendication 8.

18. Une méthode pour produire des moulages en polyester coloré par l'addition d'un colorant dans un procédé, caractérisée en ce que ledit colorant est ajouté sous forme d'une composition liquide comme il est revendiqué dans la revendication 8.
